# EUROPEAN PATENT APPLICATION

(11) **EP 2 431 939 A1**
(43) Date of publication of application: **21.03.2012**
(21) Application number: 09844227.0
(22) Date of filing: 24.11.2009
(51) Int. Cl.: G06T 1/00

(54) **DISTRIBUTED IMAGE PROCESSING METHOD AND IMAGE PROCESSING SYSTEM**

(30) Priority: 08.05.2009 CN 200910083710
(71) Applicant: Run Technologies Co., Ltd. Beijing, Haidian District, Beijing 100044 (CN)
(72) Inventor: MA, Yi, Haidian District Beijing 100044 (CN)
(74) Representative: Bohnenberger, Johannes
(86) International application number: PCT/CN2009/001310
(87) International publication number: WO 2010/127475

(57) **Abstract**

This application discloses distributed image processing methods and system with massive data flow. The image processing system can include three structures: from the top level to the lower level, a file server, a forwarding server and an image processing server. The servers are connected by Ethernet with hardware and socket interface of TCP/IP protocol. When processing a large amount of image data, many forwarding servers can be implemented for file processing in conjunction with one or more file servers. Image analysis servers and forwarding servers can be added to increase processing capacity. A high-level forwarding server can be added for receiving, formatting, transmitting, and distributing image data.

## Description

### TECHNICAL FIELD

The present invention relates to computer image processing technologies, and in particular, to methods and system for distributed image processing with huge data flow.

### BACKGROUND OF THE INVENTION

Nowadays, common image applications include face recognition in images in cameras, recognition of vehicle license plate of vehicles on high ways, access control system, fingerprint-based attendance machine, and so on. Conventional imaging processing systems are stand along devices. The amount of data to be processed is small, which allows data collecting and processing to be conducted on a single computer or a single processor chip.

However, it is difficult for a single-chip computer to handle those applications that produce huge data flows. There is therefore a need for technologies for rapid and effective image processing for a huge amount of image data.

### SUMMARY OF THE INVENTION

To solve the above-mentioned problems, this invention provides distributed image processing methods and image processing system, which conducts information analysis in a distributed arrangement while processing the results of information analysis at a central location. The present invention can effectively and rapidly process a huge amount of image data, through increased network bandwidth and the number of image processing device. The present invention can handle a huge data flow and accomplish image processing in a short time.

### BRIEF DESCRIPTION OF THE DRAWINGS

Figure 1 shows a sequence diagram for system operation in accordance to the present invention.
Figure 2 shows a sequence diagram for status monitoring in accordance to the present invention.
Figure 3 shows a connection frame diagram among servers in accordance to the present invention.
Figure 4 shows a schematic diagram of processing massive flow image data in accordance to the present invention.

### DETAILED DESCRIPTION OF THE INVENTION

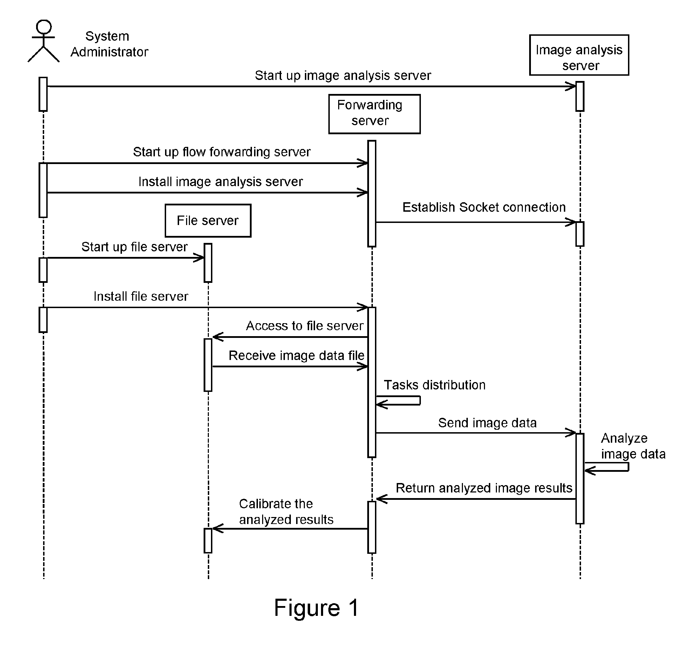

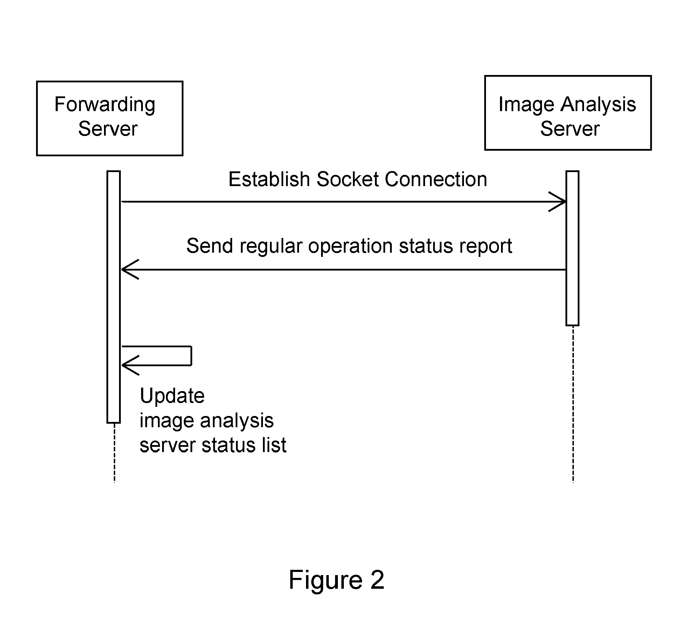

In order to achieve the above described objectives, referring to Figures 1 and 2, the distributed image processing method includes the following steps:
1) A file server receives image data, and gives a unique ID to each image. The file server transfers the image data to forwarding servers in the next level using network communication protocols or Window's sharing protocol. The file server analyzes the feedback from each forwarding server and selects the forwarding server that has the shortest waiting queue to send task. If several forwarding servers have short queues (Figure 2), the file server sends the task to the first forwarding server in a sequence that has short queues.
2) After receiving data from the file server, the forwarding server stores the image ID and associated image data or data resend information (e.g. double re-sending error is regarded as transmission failure). The forwarding server then transfers the image data to an image analysis server in the next level according to interface and usage interface related protocol. The forwarding server records and stores data status including the reception time for the image data, which file server from which the image data is received, which image analysis server to which the image data is sent, and the time at which the image data is sent, which are used for feedback after results are obtained.
3) After the image analysis server receives the data from the forwarding server, the image analysis server processes the data, analyzes each image using algorithm for pre-defined applications, and returns the results to image analysis server according to the requirements of interface and protocols.
4) The forwarding server receives the results of the image analysis in association with the unique IDs from the image analysis server. The forwarding server verifies the image data ID according to stored information for the image transmission and reception, and sends the results to the corresponding file server.
5) After the file server receives the results from the forwarding server, it stores the results, and displays the results at a user interface.

Furthermore, the file server and the image analysis server store image state information. Each server collects the image state information on a regular basis, and transfers the image state information to the upper level servers. The file server records and stores data state information and data resend information (e.g. double re-send error is regarded as transmission failure). The forwarding server also stores and record data state information, including the time of receiving image data, image ID, which time to send, which server to send, and check image data ID from stored sending state information and store the analysis results.

In the above mentioned step 2), if the data flow is very large, the image data can be transferred to the forwarding server in the next level, and forwarded to the image analysis server from the forwarding server. The forwarding server analyzes the state information from the image analysis servers, and selects the image analysis server having the shortest waiting queue to forward image processing task.

The distributed image processing system disclosed in the present invention works from high-level to the low-level servers: the file server, the forwarding server, to the image analysis server. The servers are connected by Ethernet and sockets based on TCP/IP protocols. The file server is used to input image data. The forwarding server is used to distribute image data to image analysis server and to return the analysis results from the image analysis server to the file server. The image analysis servers analyze image data and return feedback to the forwarding server.

### 1. Systematic logical structure:

The disclosed distributed image processing system includes one or more file server(s), one or more forwarding server(s) (including high level forwarding server and lower forwarding server when massive application) and one or more image analysis server(s). The distributed image processing system is divided into 3 levels in logical structure. The file server is the top level, which is responsible for image generation and display of analysis results. The second level is the forwarding server, which is mainly in charge of the feedback of data receiving, formatting, distributing, analysis information and operation condition etc. The image analysis server is in the third level and it receives image data and transfers analysis results to the forwarding server after processing and analyzing the data.

### 2. Interfaces between servers:

The servers can be connected by Ethernet, especially using socket interfaces based on TCP/IP protocols. Within TCP/IP, the communication can be based on network communication protocols or Window's default sharing protocol. The communication is kept always on and the communication state is monitored. It keeps connecting repeatedly if the network is disconnected.

The file server uses two methods for data connections:
1) Active mode: the transmission is initiated by the file server. When the image data is received, the file server formats the image data in accordance with network communication protocol or the communication protocol defined in this invention, and then transfers the formatted image data to the forwarding server. The forwarding server transfers the analysis results to the file server according to protocol for further processing.
2) Passive mode: for the versatility and practicability, the file server can transfer image data based on Window's default sharing protocol. The transmission is initialed by the forwarding server. It connects and logs in Window's network sharing of the file server. Then the forwarding server receives image file, input by the file server according to specified directory. Finally, the forwarding server records the processed data in sharing directory in txt or XML. The format of the files can be defined as users' request.

### 3. Physical structure

When data flow is not heavy, the image processing system can be set a unified Ethernet environment. For a large amount of image data, the forwarding server can be equipped with dual-network card for data transmission in different segments.

### 4. Extension for massive data flow

Under the condition of huge data flows, the invention image processing system provides the forwarding servers to divide data processing tasks horizontally and vertically.

The horizon division uses multiple forwarding servers to process files for one or more file servers. Specifically, the file server can include different directories or IP address.

The vertical division divides forwarding servers into high and lower level forwarding servers. A high level forwarding server needs to meet high performance requirements so as to accomplish receiving, formatting, transmission and distribution of the data from the file servers. Less performance capabilities are required for a lower level forwarding server, because it only needs to transmit and distribute data from the file server, but does not need to receive and format such data. Image analysis servers and forwarding servers can be added to increase processing capability. An additional high level forwarding server is used for image data transmission and distribution. The high level forwarding server has higher network speed than the lower level forwarding server under the resources saturation condition. Accordingly, the high level forwarding server has higher data distribution capacity similar to router. The telecom grade servers are sufficient to meet the needs for the maximum load of image processing. In practice, both horizon and vertical divisions can be applied at the same time in the disclosed distributed image processing system.

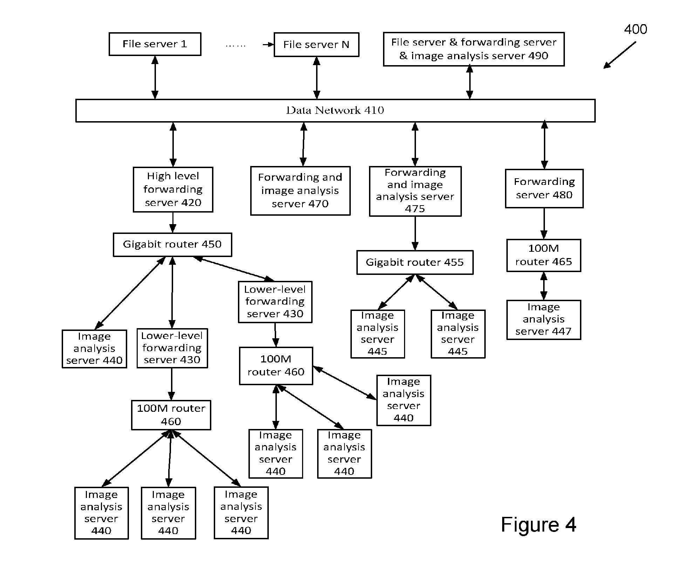

If a large amount of image data is to be processed, the image data is stacked in high level forwarding servers. Referring to Figure 4, a high level forwarding server on the left side can handle a set of huge data processing tasks. The right side shows a forwarding and image analysis server that integrates the forwarding and image analysis within a server, which provides adequate solution for processing a small amount of image data.

### 5. Operating process

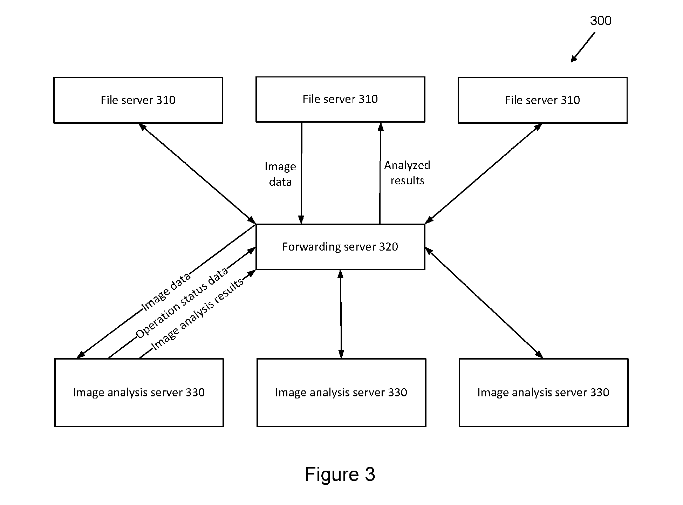

As shown in Figure 3, a distributed image processing system 300 includes file servers 310, one or more forwarding servers 320, and one or more image analysis servers 330. The file server 310 communicates with the forwarding server 320. The forwarding server 320 communicates with the image analysis servers 330. The file servers 310 input image files which are transferred to the forwarding server 320. The forwarding server 320 stores the IP address and interface with the installation of image analysis servers 330. The forwarding server 320 formats the image files according to network protocols, assigns ID to the image files, and distributes image files to the image analysis servers 330. The installation of file server IP, port and file directory is for returning analysis results to the file server 310. The image analysis server 330 receives image data packets distributed from the forwarding server 320, analyzes the image data, and returns the results to the forwarding server 320.

The image files and video files can be stored chronically on the file server 310. The forwarding server 320 receives the image files and video files to be analysis, format the image files, and distributes them to the corresponding image analysis server. As the image analysis server starts up, it automatically initiates image analysis programs and keeps working, waiting at all times for receiving image data from the forwarding server 320. After the image analysis server 330 obtains image data. For example, the image analysis server 330 can poll new files in a directory in the file server 310. If the image files are new, the image analysis server 330 transfers, analyzes and receives image data through image algorithms, identifies focused information (which varies according to applications, for example, pornography) and then returns the analysis report to the forwarding server 320. According to analysis report, the forwarding server 320 returns analysis results to the presentation module in the file server 310. The presentation module is defined by algorithm and application. The data transmission protocol in this invention is completely adapted to customized filed extension to accomplish the image processing.

The distributed image processing system 300 provides monitoring interface in the forwarding servers 320 and the image analysis servers 330 by installing image analysis server IP and port in the forwarding server 320. The system can monitor the computer and operation status of the forwarding server 320, including the activity levels of the processor, the memory, and the hard drive. Information is regularly transferred to the relevant forwarding servers 320 by lower-level computer. High level forwarding server 320 collects operation status from lower-level servers when there are many levels. Program how images, input by the file server 310, is transferred to the forwarding server 320 and how the processed information is returned to the forwarding server 320 by installing image analysis server IP, port and file directory, so as to provide analysis results for presentation module.

In the present invention, the file server 310 can include a file module and a presentation module. The file module is used to input image and store results after processing. The presentation module can present the outcome of processing images. The forwarding server 320 can include a formatting module and transmission & distribution module. The formatting module can format image files from the file server 310 to the ones which can be identified by the image analysis server and return the formatted analysis results to the forwarding server 320. Transmission & distribution module is for transferring and distributing image files to the image analysis server 330. The image analysis server 330 is for analyzing and processing image data.

The method in the formatting module of this invention is: read image files from the specified file server 310 and format file suffix and files according to network communication protocol and then transfer.

The image file is transferred to the image analysis server 330 that has the shortest task-waiting queue according to feedbacks from the image analysis server 330.

Furthermore, installed monitoring module for operation status is in each level forwarding servers 320. Each level forwarding server 320 provides users with unified status monitoring interface for real time information of the system operation.

The disclosed methods in the present application can include the following advantages:
1. The disclosed methods can maximize the usage of computer and network resources, completing complicated image algorithms efficiently.
2. The disclosed methods are flexible and convenient, which can be adapted to the distributed image processing with massive flow and improves computer and processing capacity.

### Detailed implementation methods

The presently disclosed invention can be better understood by the figures and detailed implementation examples as described below.

### A. Image processing procedure

As shown in Figure 1, the forwarding server actively reads image data from some directory and then stores processed results as specified directory in the file server.

The procedure of passive image processing of the file server can include the following steps:
1. Start up and connect each server
2. Install file server IP, port and directory in the forwarding server using Window's default sharing protocols. The forwarding server logs in the file server and obtains read-write authority.
3. Install image analysis server IP and port; establish connection with the image analysis server.
4. The forwarding server receives image files from the file server, formats image files in accordance with network communication protocol, gives ID to each image file, packs them and distributes image file packets to the image analysis server with the optimization principle of picking out the shortest one in the task-waiting queue.
5. The image analysis server analyzes image data packets, packs the results, and returns them to the forwarding server.
6. The forwarding server formats analyzes image results and returns them to specified directory and complete the image processing.

### B. The image processing system structure

Figure 4 illustrates the processing of a massive amount of image data by a distributed image processing system 400 that includes file servers 1-N, a data network 410, a high level forwarding server 420, lower-level forwarding servers 430, and image analysis servers 440. The number of image analysis servers 440 can be determined by the number images processed per second divided by the image processing speed of individual image analysis servers 440. The number of the lower-level forwarding servers 430 can be determined by dividing the number of the image analysis servers 440 by the number of image analysis servers processed by each forwarding server 420. The low level forwarding servers 430 can include a formatting module and a transmission & distribution module, which is for formatting, transferring and distributing the image data. The high level forwarding server 420 is used for transferring and distributing image data.

The file servers 1-N are connected with the high level forwarding server 420 which is communication with lower-level forwarding servers 430 and image analysis servers 440 by a Gigabit router 450. The lower-level forwarding server 430 is connected with image analysis servers 440 by a 100M bit router 460. The data flow through the Gigabit router 450 should be more than that the dataflow through the 100 M bit router 460.

As an example, image data is processed at a rate of 1000 images per second; each image analysis server 440 can process 10 images per second; each low-level forwarding server 430 can support 10 image analysis servers 440. There should be 100 image analysis servers, 10 lower-level forwarding servers 430 on the left side of the distributed image processing system 400. The gigabit router 450 connects the high-level forwarding server 420 and the lower-level forwarding servers 430. The 100M bit router 460 connects a lower-level forwarding server 430 and image analysis servers 440.

The high level forwarding server 420 transfers and distributes image data, and does not need to format image files, which therefore has higher network speed than the lower level forwarding server 430. Thus the high level forwarding server 420 has a data distribution capacity similar to a router (e.g. 450). The high level forwarding server 420 can be provided with telecom-grade servers.

For operation status, a monitoring module can be installed in the high level or lower level forwarding servers 420, 430 in the distributed image processing system 400. Each level forwarding server can provide unified status monitoring interface for real time information of the system operation, including operation time, operation status, the number of processed data, the amount of data being processed, the processor usage, the hard drive usage, the network usage and so on.

Adequate solution is also provided for processing a small amount of image data in different system structures, as shown on the right side of in Figure 4. In one implementation, a forwarding and image analysis server 475 is in communication with the file servers 1-N via the data network 410. A gigabit router 455 connects the forwarding and image analysis server 475 with image analysis servers 445. The forwarding and image analysis server 475 can perform data forwarding functions and some simple image processing tasks. Image processing tasks that require more computation are forwarded to the gigabit router 455 and further to the image analysis servers 445 in which the images are processed.

For lower amount of image processing tasks, the distributed image processing system 400 includes a forwarding and image analysis server 470 that integrates the forwarding and image analysis functions within a server. The forwarding and image analysis server 470 can handle small volume of image processing tasks.

At a higher level of integration, a server 490 integrates the functions of a file server, a forwarding server, and image analysis server within a server. The server 490 is also suitable for handling a small volume of image processing tasks. The servers 470, 490 each can include multiple cores that can handle multiple tasks in a multiple processes.

In one implementation, a low volume of image processing tasks can be performed by separate low power servers. The distributed image processing system 400 includes a forwarding server 480 which is connected to a 100 Mbit router 465, which in turn is connected to an image analysis server 447. The forwarding sever 480 is equipped with processing power suitable for data forwarding while the image analysis server 447 is dedicated to image processing.

### C. System communication protocol

Network communication protocol for file transmission can realize image processing with massive data flow. This invention provides a network protocol, which can complete distributed image processing more rapidly. In this protocol, there are 3 major data transmission types: image data, image analysis results, i.e. analysis report and system operation status, i.e. status report. Detailed data transmission protocol is shown in Table 1.

**Table 1 Data Transmission Protocol**

| **SN** | **Item** | **Type** | **Description** |
|---|---|---|---|
| 1 | ID | CString | Only identification |
| 2 | Type | integer | Data types |
| | | | 0: image data |
| | | | 1: analysis report |
| | | | 2: status report |
| 3 | DataLength | long | Data Length |
| 4 | ExtensionLong | long | Extension Length |
| 5 | ExtensionString | CString | Extension String |
| | | | Image data: image file type |
| | | | Analysis report: contents of analysis report |
| | | | Status report: contents of status report |
| 6 | Data | char* | Data filed |
| | | | Image data: FILE |
| | | | Analysis report: NULL |
| | | | Status report: NULL |

Next is detailed data network transmission protocol. Image data in transmission has unique ID. ID's prefix is generated from different server and IP Different random numbers has different types of contents of transmission data.
0: Image data ExtensionString is image file type, the format is as below:

| |
|---|
| **<DataSource>12.34.56.7</ DataSource ><Ext>JPG</Ext>** |

DataSource tag: Source server IP of image data
Ext tag: Extension of image data
It can be extended other tags
There is no nested relation among tags.

1: Analysis report ExtensionString image analysis result data, the format is transferring string to array, as below:

| |
|---|
| **<DataID>1234567</DatatD><DataSource>12.34.56.7</ DataSource ><EEL>23%</EEL>** |
| **<FLG>40%</FLG><OCR>Hello</OCR>** |

DataID tag: ID relevant image data ID in analysis report
EEL tag, FLG tag, OCR tag is defined study and presentation contents in presentation module by users.

2: Status report ExtensionString is system operation status data, as below:

| |
|---|
| **<IP>192.168.0.123</IP><TaskProcessed>896</ TaskProcessed ><TaskProcessing>9</ TaskProcessing** > |
| **<AppState>1</AppState><HostState>2</HostState><NetState>3</NetState><Time>78934</Tixne>** |
| **<CPU>46%</CPU><RAM>46%</RAM><Disk >46%</Disk ><NetFlux>46%</NetFlux>** |
| **<IBuffer>46%</IBuffer><OBuffer>46%</OBuffer>** |

This includes: IP tag: Local host computer IP
TaskProcessed tag: Processed task
TaskProcessing tag: Processing task
AppState tag: System operation status
HostState tag: Host computer status
NetState tag: Network communication status
Time tag: System operation time, calculated in second
CPU tag: Host computer CPU usage
RAM tag: Host computer RAM usage
Disk tag: Highest usage in Hard disk
NetFlux tag: Network flow, calculated in MB/S
IBuffer tag: Usage of input buffer
OBuffer tag : Usage of output buffer

It should be understood that the above described detailed implementation and figures are aimed at helping readers to understand the present invention and implement accordingly. However, as practitioners in this field can appreciate, the present invention can be implemented in different variations and with approaches without deviating from the spirit of the invention. It should be understood that the scope of the prevent invention is not limited to the specific implementations and examples described above.

## Claims

1. This method is based on distributed image processing, including the following steps:
1) The file server inputs the image data which is given a unique ID; the data is formatted according to the network communication protocol and distributed to the forwarding server.
2) The forwarding server receives image data, records and stores the status information of the image data and then distributed to the image analysis server for results in accordance with different unique ID.
3) The image analysis server analyzes the received image data and returns the result to the forwarding server.
4) The forwarding server receives the analysis results, check the stored image data and return the results to the file server according to ID.
5) The file server receives and stores the analysis results, completing image processing.

2. Mentioned in Article 1, the feature of the distributed image processing methods is the stored image data status information in the forwarding server, includes the time of receiving the image data, the source file server, the image analysis server that receives image data and the times of image data sent.

3. Mentioned in Article 1, the feature of the distributed image processing methods is image data in step 1 includes file server IP in this domain, extension of image data and if this image data can be extended.

4. Mentioned in Article 1, the feature of the distributed image processing methods is the forwarding server in step 2 selects the image analysis server having the shortest waiting queue to forward image data.

5. Mentioned in Article 1, the feature of the distributed image processing methods is the forwarding server in step 1 is high level forwarding server. High level forwarding server distributes image file to lower-level forwarding server and lower-level forwarding server continues to send image data to the image analysis server.

6. It is a distributed image processing system. From high to low, it is file server, forwarding server and image processing server. All servers are connected by Ethernet with hardware and socket interface of TCP/IP protocol. The file server is used to input image data; the forwarding server is used to distribute image data to the image analysis server and return the analysis results to file server; the image analysis server is sued to analyze image data and return the feedback to forwarding server.

7. Mentioned in Article 6, it's a distributed image processing system, and the feature is file server is composed of file module and presentation module. File module is used to input image file and store the image processed results. Presentation module is used to present image processed results that are returned to file server from the forwarding server. Forwarding module includes formatting module and transmission & distribution module. Formatting module is used to format image file to identified file of image analysis server. Transmission & distribution module is used to distribute image file to image analysis server.

8. Mentioned in Article 6, it's a distributed image processing system and the feature is it includes many image analysis and the forwarding servers. The number of the image analysis servers is related to the amount of images needed to be processed and the processing speed of image analysis server. The number of the forwarding servers is related to the number of analysis servers and the number of image analysis servers that each forwarding server has processed.

9. Mentioned in Article 6 or 8, it's a distributed image processing system and the feature is the system also includes high level forwarding server for realizing data transmission and distribution.

10. Mentioned in Article 9, it's a distributed image processing system and the feature is installing monitoring module among each forwarding server for monitoring the real time system operation status.
